# EUROPÄISCHE PATENTSCHRIFT

(11) **EP 2 432 691 B1**
(45) Veröffentlichungstag und Bekanntmachung des Hinweises auf die Patenterteilung: **18.01.2017**
(21) Anmeldenummer: 10720289.7
(22) Anmeldetag: 05.05.2010
(51) Int. Cl.: B64D 11/00, B64D 11/02

(54) **TOILETTENMONUMENT MIT EINER AUFNAHME FÜR EINE MOBILE SANITÄREINHEIT**
WC MONUMENT COMPRISING A RECEIVING REGION FOR A MOBILE SANITARY UNIT
INSTALLATION DE TOILETTES MUNIE D'UN LOGEMENT POUR UN ENSEMBLE SANITAIRE MOBILE

(30) Priorität: 19.05.2009 DE 102009021969; 19.05.2009 US 179472 P
(43) Veröffentlichungstag der Anmeldung: 28.03.2012
(73) Patentinhaber: Airbus Operations GmbH, 21129 Hamburg (DE)
(72) Erfinder: DANNENBERG, Andreas, 21629 Neu Wulmstorf (DE); LINDAUER, Christiane, 22589 Hamburg (DE); VOGT, Thomas, 22547 Hamburg (DE)
(74) Vertreter: Kopf Westenberger Wachenhausen Patentanwälte PartG mbB
(86) Internationale Anmeldenummer: PCT/EP2010/056080
(87) Internationale Veröffentlichungsnummer: WO 2010/133448

(56) Entgegenhaltungen:
- EP-A1- 1 752 589
- EP-A2- 0 074 934
- DE-A1- 4 409 069
- DE-A1-102006 042 300
- US-A1- 2005 116 099

## Beschreibung

### Gebiet der Erfindung

Die Erfindung betrifft ein Toilettenmonument für ein Personentransportfahrzeug, insbesondere ein Toilettenmonument mit einer Sanitäreinheit, die leicht zu warten und zu reinigen ist.

### Technologischer Hintergrund

Im Bereich des Personentransportes wie zum Beispiel bei Flugzeugen, der Bahn, oder Kraftfahrzeugen wird der Reisekomfort erheblich durch die Ausstattung durch Sanitäreinheiten wie zum Beispiel Toiletten erhöht. In der Luftfahrt gehört es zum Stand der Technik, zumindest eine zentrale Vorrichtung zur Drainage beispielsweise einen sogenannten Drainmast anzuordnen, um das während des Fluges bei Benutzung von Handwaschbecken anfallende Grauwasser zentral außerbords ablassen zu können. Auch ist es üblich, ein zentrales Frischwassersystem anzuordnen, um beispielsweise Waschbecken, Toiletten oder andere Wasserverbraucher wie die Bordküche zu versorgen.

Aus der DE 102 29 799 A1 ist beispielsweise ein zentrales Frischwasser/AbwasserSystem bekannt, bei welchem ein zentrales Grauwassersystem vorgesehen ist, welches entweder über einen zentralen Drainmast abgelassen werden kann oder für die Toilettenspülung nach einer Behandlungsstufe wiederverwendet werden kann.

Ferner ist aus der GB 964,971 eine Toiletteneinheit insbesondere für Flugzeuge bekannt, wobei das Abwasser wiederverwendet wird in einem sogenannten Rezirkulationssystem. Auf diese Weise kann das in der Toilette anfallende Wasser gefiltert werden und zur Toilettenspülung wiederverwendet werden. Die genannte Toiletteneinheit kann sowohl an Bord eines Flugzeuges gewartet werden oder auch aus dem Flugzeug zur Wartung entfernt werden.

Die US 2005/116099 A1 befasst sich damit, den nutzbaren Raum innerhalb von Flugzeugentoiletten zu vergrößern. Bei einem neben einem vorbestimmten Bereich, z.B. einem Eingangsbereich, angeordneten Toilettenraum ist ein drehbares Modul vorgesehen, das in einer ersten Winkelstellung angeordnet werden kann, in der das Modul zwar innerhalb des Raums angeordnet ist, aber außerhalb des vorbestimmten Bereichs. Das Modul kann auch in eine zweite Stellung gedreht werden, in der es in dem vorbestimmten Bereich angeordnet ist, aber außerhalb des Raums. An dem drehbaren Modul ist beispielsweise ein Waschbecken gehalten, das in der zweiten Stellung von innerhalb des Raums zugänglich ist.

An Bord von Personentransportfahrzeugen sind Sanitäreinheiten für die Wasserver- und Entsorgung überwiegend in sogenannten Monumenten, wie zum Beispiel in einem Toilettenmonument, fest angeordnet. Diese großen Monumente können nur mit erheblichem Zeit- und Kostenaufwand komplett ausgebaut werden, da sie in der Regel nicht mehr nachträglich durch die Türöffnungen des Personentransportfahrzeuges passen. Aus diesem Grunde ist es erforderlich, eigenständige und kompakte mobile Sanitäreinheiten bereitzustellen, die einfach aus einem Toilettenmonument für Reinigungs- oder Wartungszwecke entfernt werden können.

Sanitäreinheiten an Bord von Personentransportfahrzeugen wie Handwaschbecken, Toiletten oder Duschkabinen erfordern eine zentrale Wartung und regelmäßige Desinfektion. Diese Wartungen können nur während der Standzeiten des Personentransportfahrzeuges an speziellen Servicecentern ausgeführt werden und sind in der Regel zeit- und kostenaufwändig.

### Zusammenfassung der Erfindung

Die Aufgabe der Erfindung besteht darin, ein Toilettenmonument zu schaffen, das leicht zu warten und zu reinigen ist.

Die Aufgabe wird gelöst durch den Gegenstand der unabhängigen Ansprüche, wobei weitere Fortbildungen in den abhängigen Ansprüchen verkörpert sind. Die im Folgenden beschriebenen Ausführungsformen beziehen sich sowohl auf ein Toilettenmonument sowie auf ein Personentransportflugzeug, insbesondere auf ein Flugzeug, das mit einem Toilettenmonument ausgestattet ist.

Gemäß der Erfindung wird ein Toilettenmonument bereitgestellt, das eine Aufnahme, eine mobile Sanitäreinheit, eine erste Öffnung und eine zweite Öffnung umfasst. Dabei ist die Aufnahme ausgelegt, die mobile Sanitäreinheit, die alle für den Betrieb der Sanitäreinheit erforderlichen Komponenten aufweist, aufzunehmen. Ferner weist das Toilettenmonument eine erste Öffnung zum Betreten des Toilettenmonumentes auf und eine zweite Öffnung, die von der ersten Öffnung verschieden ist, um die mobile Sanitäreinheit einzubringen oder zu entfernen.

Alle für den Betrieb erforderlichen Komponenten betreffen insbesondere den Flüssigkeitszu- bzw. ablauf der Sanitäreinheit, der autonom beispielsweise als Kreislauf ablaufen kann. Die Komponenten umfassen beispielsweise einen Sammelbehälter für anfallendes gebrauchtes Wasser, sowie Zuleitungen, Pumpen, Filter, Ventile, Rohre sowie Elektronik. Ist für die sanitäre Einheit ein Frischwassertank wie beispielsweise bei einer Handwascheinheit erforderlich, ist auch diese Komponente zu den für den Betrieb erforderlichen Komponenten zu zählen. Für Toiletteneinheiten mit Rezirkulationslösung ist dagegen für den autonomen Betrieb kein Frischwassertank notwendig, während in diesem Fall die Verwendung von Chemikalien für den Betrieb erforderlich ist. Eine Stromversorgung kann von extern und/oder innerhalb vorgesehen werden. Als interne Stromversorgung kann ein innerer Akkumulator beispielsweise als Notstromversorgung dienen.

Aufgrund der Anordnung des Toilettenmonumentes kann das Wartungspersonal am Boden die mobile Sanitäreinheit einfach einbringen und entfernen und somit eine einfache und hygienische Handhabung gewährleisten. Technische Probleme können dann in geeigneten Werkstätten außerhalb des Personentransportfahrzeuges dezentral gelöst werden. Eine derartige mobile Sanitäreinheit ist eigenständig und kann dezentral gereinigt, entleert, aufgefüllt und gewartet werden. Eine dezentrale Reinigungs- und Wartungslösung der Sanitäreinheiten, die in Toilettenmonumente eingesetzt werden, spart somit erhebliche Kosten ein.

Das sperrige Toilettenmonument selbst kann in dem Verkehrsmittel bleiben und muss nicht aufwändig ausgebaut werden. Die erste Öffnung, die als Türöffnung ausgelegt ist, kann somit relativ schmal ausgeführt werden, so dass eine Person das Toilettenmonument betreten kann. In die genannte erste Öffnung des Toilettenmonumentes kann eine verschließbare Toilettentür angeordnet werden, die entweder als schwenkbares Vollelement oder als platzsparende Falttür ausgeführt ist.

Eine zweite Öffnung des Toilettenmonumentes ist so ausgelegt, dass sie eine mobile Sanitäreinheit ideal aufnehmen kann, das heißt, sich z.B. nach der Höhe und Breite dieser Einheit richtet. Vorteilhafterweise wird diese zweite Öffnung zur Aufnahme der mobilen Sanitäreinheit an einer Seitenwand des Toilettenmonumentes angeordnet, so dass die mobile Sanitäreinheit in einen benachbarten Türeingangsbereich einfach ausgefahren werden kann. Während der Reisezeit ist die Sanitäreinheit mit dem Toilettenmonument sicher angekoppelt und kann z.B. nur von qualifiziertem Personal ausgelöst werden. Die Auslösung und Entsicherung der mobilen Sanitäreinheit aus dem Toilettenmonument wird in der Regel während der Stillstandszeiten des Verkehrsmittels durchgeführt werden. Unter einer mobilen Sanitäreinheit wird beispielsweise eine Toiletteneinheit, eine Handwascheinheit, ein Urinal, eine Dusch- oder Wanneneinheit verstanden.

Toilettenmonumente, die nicht neben einem Eingang positioniert sind, sondern zwischen den Sitzreihen, können z.B. über eine an der vorderen Wand angeordnete Öffnung über den Gang und anschließend durch eine Passagiertüre aus dem Verkehrsmittel befördert werden. Durch die Möglichkeit der externen Wartung der mobilen Sanitäreinheiten werden die Standardwartungsintervalle während der Stillstandszeiten der Verkehrsmittel erheblich verkürzt bzw. vermieden. Bereits fertig desinfizierte und bereitgestellte mobile Sanitäreinheiten können sofort in das Toilettenmonument eingebaut werden und die gebrauchten sanitären Einheiten werden zur Desinfektion, Wartung oder Reparatur abgegeben.

Auf Grundlage der modular einsetzbaren mobilen Sanitäreinheiten, kann auf spezielle Kundenwünsche eingegangen werden. Beispielsweise kann eine Rezirkulations-Toiletteneinheit durch ein mit Spülwassertank bestücktes Unterdrucksystem ersetzt werden. Insbesondere bei Luftfahrzeugen kann je nach geplanter Flugreisezeit und somit unterschiedlichen Anforderungen für Gewichtsersparnis zwischen einer wasserlosen Rezirkulations-Toiletteneinheit und einer Spülwasserlösung gewählt werden.

Gemäß einem weiteren Ausführungsbeispiel der Erfindung umfasst das Toilettenmonument eine mobile Sanitäreinheit, welches ein Gehäuse mit einer geruchs- und/oder flüssigkeitsverschließenden Abdeckung aufweist.

Auf diese Weise kann ein Geruchsabschluss bzw. Wasserabschluss bereitgestellt werden, der verhindert, dass bei den Austauscharbeiten Passagiere oder das Wartungspersonal durch Austritt von Geruch oder Flüssigkeiten belästigt werden. Insbesondere für eine Sanitäreinheit in Form einer Toiletteneinheit ist ein funktionierender Geruchsabschluss von Bedeutung. Ein Flüssigkeitsverschluss dient dazu, insbesondere beim Hantieren und Transportieren der mobilen Sanitäreinheit einen Austritt von Flüssigkeiten bzw. Restflüssigkeiten auszuschließen. In der Verschließstellung der Abdeckung ist von Bedeutung, dass die Öffnungen des Gehäuses vollständig dichtend gegen die Abdeckung verschlossen werden. Dies kann beispielsweise über eine Schraub- oder Klemmeinrichtung geschehen.

Während die Abdichtungsvorrichtung sich allein auf die Flüssigkeit führenden Vorrichtungen beschränken kann, kann die Abdeckung bis zu den Seitenwänden der mobilen Sanitäreinheit ausgedehnt sein, um die Sanitäreinheit optisch zu verschließen. Auf diese Weise ist die Funktion der mobilen Sanitäreinheit von außen nicht ersichtlich. Die Abdeckung ist an dem Gehäuse der mobilen Sanitäreinheit beispielsweise schwenkbar befestigt. Die Abdeckung kann andererseits auch schiebbar angeordnet sein.

Gemäß einer vorteilhaften Ausgestaltung der Erfindung besitzt die mobile Sanitäreinheit des Toilettenmonumentes eine Roll- oder Gleitvorrichtung.

Roll- oder Gleitelemente können die Verschiebung und somit den Transport der mobilen Sanitäreinheit erleichtern. Hierzu eignen sich beispielsweise Walzenrollen, Kugelrollen, Zapfen, Schienen oder Gleitkufen. Sollen Schienen genutzt werden, die bereits in dem Boden des Kraftfahrzeugs oder Personenfahrzeugs vorhanden und eingebaut sind, kann die mobile Sanitäreinheit mit entsprechenden Schienenbahnsystemen und geeigneten Zapfen ausgerüstet werden. Auf diese Weise kann die sanitäre Einheit leicht transportiert werden und in Räume außerhalb des Verkehrsmittels transportiert werden, die eine schnelle, einfache und hygienische Reinigung möglich machen. Zum sicheren Transport können nicht nur Rollenvorrichtungen sondern auch geeignete Bremsvorrichtungen oder Stoppvorrichtungen gegen unkontrolliertes Wegrollen zur Verfügung stehen.

Ferner ist es möglich die Rollen oder Kufen so zu gestalten, dass sie beim Einschub in die Aufnahmeöffnungen des Toilettenmonumentes einklappen. Das Einschieben auf im Toilettenmonument installierte Schienen kann wiederum durch an die mobile Sanitäreinheit angebrachte passende Schienen unterstützt werden, so dass die Rollen nur für den Transport benutzt werden und im Toilettenmonument nicht mehr verwendet werden. Des Weiteren ermöglichen an dem Gehäuse angebrachte Griffe eine gute Handhabung für Transport, Einschub bzw. Herausnahme aus dem Toilettenmonument. Auf diese Weise kann eine dezentrale Entsorgung der in der mobilen Sanitäreinheit anfallenden Abwässer und die Desinfektion der gesamten Einheit einfach gewährleistet werden.

Für die Handhabung ist es besonders wichtig, eine gute Mobilität und einen luft- und flüssigkeitsdichten Verschluss für die mobile Sanitäreinheit zur Verfügung zu stellen. Eine nach außen sichtbare Anzeige soll das Wartungspersonal bzw. Bordpersonal darüber informieren, welchen Füllstand die relevanten Flüssigkeits- bzw. Abfallbehälter der Sanitäreinheit erreicht haben. Beispielsweise für eine Toiletteneinheit wäre die Füllstandsanzeige für den Grad des Abwasserfülltanks maßgebend. Die komplett gefüllte Toiletteneinheit kann daraufhin über die Passagiertür und anschließend eine entsprechende Fördereinrichtung zum Servicing transportiert werden. Erst in den entsprechenden Entsorgungs- oder Reinigungskammern erfolgt das Öffnen des Systems, welches auch automatisch erfolgen kann.

Gemäß einer beispielhaften Ausführungsform der Erfindung ist die zweite Öffnung des Toilettenmonumentes durch eine Seitenwand der mobilen Sanitäreinheit verschließbar.

Auf diese Weise kann Platz und Gewicht gespart werden, da sich die Seitenwand des Toilettenmonumentes als festes Einrichtungsobjekt und die mobile Sanitäreinheit im eingeschobenen Zustand zusammen eine Wandeinheit bilden. Dabei kann die Seitenwand des Gehäuses der mobilen Sanitäreinheit an dem Toilettenmonument gesichert werden. Die im folgenden beschriebenen Anbindungsvorrichtungen können auch die Funktion haben, eine Seitenwand des Gehäuses der mobilen Sanitäreinheit zu arretieren, so dass eine schlüssige Verbindung zwischen den Bauteilen des Toilettenmonumentes und der mobilen Sanitäreinheit entsteht.

Gemäß einer beispielhaften Ausführungsform der Erfindung weist das Toilettenmonument eine Anbindungsvorrichtung auf zur gesicherten und funktionsankoppelnden Anbindung der mobilen Sanitäreinheit in der Aufnahme.

Auf diese Weise kann die mobile Sanitäreinheit in dem Toilettenmonument fixiert werden, um diese vor einem unkontrollierten bzw. unerwünschten Positionswechsel zu sichern. Insbesondere bei der Verwendung in Flugzeugen können Vibrationen oder Turbulenzen zu Verschiebungen führen. Diesen kann durch geeignete Sicherungsverschlüsse wie beispielsweise Karabiner/Bajonettvorrichtungen vorgebeugt werden. Weiterhin ist auch eine Anbindung an eventuell vorhandene Sitzschienen im Kabinenboden möglich.

Die Anbindungsvorrichtung kann auch als mechanischer Schnellverschluss ausgebildet sein. Auf diese Weise kann die mobile Sanitäreinheit leicht eingerastet werden, aber nicht mehr ohne manuelle Einwirkung gelöst werden. Ist die Anbindungsvorrichtung beispielsweise eine Schiene, kann durch das Einrasten in der Schiene auch ein elektrischer Kontakt hergestellt werden und somit eine Verriegelung der sanitären Einheit zentral über das Bordsystem angezeigt werden. Durch eine elektrische Ankopplung kann auch eine zentrale Freigabe geschaltet werden, so dass nur befugtes Personal die Sanitäreinheit von der Anbindungsvorrichtung lösen kann. Beispielsweise kann das Personal über die Flight Attendant Panel (FAP)-Vorrichtung die Entriegelung der Sanitäreinheit veranlassen. Die Entriegelung sollte zusätzlich zu elektronischen Komponenten manuell durchgeführt werden, um die Sicherheitsvorschriften in Personentransportfahrzeugen zu erfüllen.

Gemäß einer beispielhaften Ausführungsform der Erfindung weist die mobile Sanitäreinheit eine Schnittstelle zur externen Stromversorgung auf, wobei der Strom induktiv übertragen wird.

Dies bedeutet, dass das Toilettenmonument bzw. die mobile Sanitäreinheit ungeachtet dessen, dass die mobile Sanitäreinheit alle für den Betrieb erforderlichen Komponenten enthält, eine Schnittstelle aufweist, über die die elektrischen Einheiten der mobilen Sanitäreinheit den Strom auch von extern beziehen kann. Eine interne Stromversorgung beispielsweise durch eine Batterie kann jedoch die mobile Sanitäreinheit bei Stromausfällen weiterhin versorgen. Durch die induktive Stromübertragung kann der Einsatz von Kabeln bzw. Steckverbindungen vermieden werden.

Gemäß einer beispielhaften Ausführungsform der Erfindung weist die mobile Sanitäreinheit eine Sensorik auf, um Messdaten auszugeben, die über eine drahtlose Schnittstelle übertragen werden können.

Die mobile Sanitäreinheit besitzt vorteilhafterweise Füllstandsmessgeräte und entsprechende Sensorik, um festzustellen, welche Wasserstände im Frisch- oder Abwassertank erreicht sind. Nach dem Erreichen der maximalen bzw. minimalen Füllstände kann eine zentrale Stelle in dem Personenfahrzeug unterrichtet werden. Somit kann nach Freigabe der Cabin Crew, die kontrolliert ob sich noch Passagiere im Toilettenmonument befinden, eine Schließung der mobilen Sanitäreinheit bzw. des gesamten Toilettenmonumentes durch eine automatische Türverriegelung veranlasst und bei der nächsten Gelegenheit ein Austausch der sanitären Einheit veranlasst werden.

Betriebsrelevante Messdaten können über eine drahtlose Schnittstelle an das Kabinenkommunikationssystem übertragen werden. Für Fälle, in denen keine Stromversorgung der mobilen Sanitäreinheit gegeben ist, wie es zum Beispiel nach Ablösen von der funktionsankoppelnden Aufnahme möglich ist, bieten sich stromlose Füllstandsanzeigen oder Statusanzeigen an, die von außen erkennen lassen, ob die mobile Sanitäreinheit gewartet werden muss oder nicht. Einer in der Elektronikeinheit vorgesehener Prozessor mit integrierter Speichereinheit kann für das Wartungspersonal Daten wie Laufzeiten der Pumpen oder Filter bereitstellen.

Gemäß einem weiteren Ausführungsbeispiel der Erfindung weist das Toilettenmonument bzw. die mobile Sanitäreinheit einen Anschluss zur Verbindung mit einem zentralen Abwassersystem auf.

Auf diese Weise können beispielsweise anfallende Grauwassermengen über einen zentralen Drainmast nach außen abgeleitet werden. Dies ist insbesondere in Flugzeugen von Vorteil, da dadurch Gewicht eingespart werden kann. Ist ein zentrales Abwasserableitungssystem wie zum Beispiel ein Vakuumabwassersystem in einem Flugzeug angeordnet, kann auf diese Weise die Leistungen der Pumpen zentral genutzt werden und somit Energie gespart werden. Durch das aufgebaute Vakuum können die Fäkalien aus der Toilettenschüssel gesaugt werden und in den Sammelbehälter überführt werden. Während Schwarzwasser in Behältern weiterhin gesammelt werden kann, kann hingegen Grauwasser außerbords über den Drainmast verbracht werden, um Gewicht einzusparen.

Gemäß einem weiteren Ausführungsbeispiel der Erfindung ist die Abdeckung der mobilen Sanitäreinheit als Rollabdeckung ausgeführt.

Auf diese Weise kann wiederum Platz gespart werden, da weder eine Schwenkvorrichtung für das Schwenken einer Abdeckung noch eine Befestigungsvorrichtung für den ausgeklappten Deckel in dem Toilettenmonument vorgesehen werden muss. Die Rollabdeckung kann so verbracht werden, dass sie hinter einer Wand des Gehäuses aufgerollt werden kann. Ferner ist es möglich, die Rollabdeckung in einer geeigneten Aufnahmevorrichtung einer Toilettenmonumentwand unterzubringen. Dies kann im aufgerollten oder aufgeschobenen Zustand erfolgen. Die Abdeckung kann mechanisch derart gekoppelt sein, dass sie sich bei Entnahme der sanitären Einheit automatisch schließt.

Gemäß einem weiteren Ausführungsbeispiel der Erfindung umfasst das Toilettenmonument eine mobile Sanitäreinheit in Form einer Toiletteneinheit, wobei die Toiletteneinheit eine Toilettenschüssel, einen Auffangbehälter für Fäkalien und Abwasser und einen Behälter zur Aufnahme von Betriebsaggregaten umfasst.

Als Betriebsaggregate können eine Elektronikeinheit mit Steuerung und Sensorik genannten werden. Ferner umfasst eine Toiletteneinheit geeignete Pumpen, Filter, Ventile sowie Zu-und Ableitungsrohre. Auf diese Weise kann eine kompakte Toilettenanlage zur Verfügung gestellt werden, dessen Entsorgung dezentral erfolgen kann. Wird dieser Toiletteneinheit noch ein Spülwassertank hinzugefügt, kann auf die Rezirkulationstechnik und damit verbundene Filter- und Fördertechnik verzichtet werden. Auch für die Spülwasserlösung umfasst das Gehäuse der Toiletteneinheit die notwendigen Ventile und Rohre, die die einzelnen Komponenten miteinander verbinden kann.

Ferner kann die Toiletteneinheit ein Toilettendeckel aufweisen, der geruchsdicht verschlossen werden kann. Weiterhin ist es vorteilhaft das Gehäuse der mobilen Toiletteneinheit mit Einrichtungen zur Aufnahme von Sanitärartikeln wie beispielsweise Toilettenpapier auszustatten. So kann eine Toilettenpapierrolle über eine in der Behälterwand angeordneten Klappe eingeführt werden und durch einen in der Seitenwand angeordneten Schlitz vom Benutzer herausgezogen werden.

Gemäß einem weiteren Ausführungsbeispiel der Erfindung weist die mobile Toiletteneinheit einen Anschluss zur Verbindung mit einem zentralen Air-Extraktionssystem auf.

Das zentrale Air-Extraktionssystem umfasst eine zentrale Entlüftungs- bzw. Luftabzugseinrichtung. Durch diese zentrale Lüftung des Verkehrsmittels kann Geruchsbelästigungen vorgebeugt werden, da die Luft, die in der Toiletteneinheit anfällt, sofort abgesaugt werden kann.

Gemäß einem weiteren Ausführungsbeispiel der Erfindung weist das Toilettenmonument eine von der ersten und der zweiten Öffnung verschiedene dritte Öffnung zur Aufnahme einer weiteren mobilen Sanitäreinheit in Form einer Handwascheinheit auf

Auf diese Weise kann eine eigenständige Handwascheinheit in das Toilettenmonument eingeführt bzw. wieder entfernt werden. Die Handwascheinheit verfügt wie bei der Spülwasserlösung in einer Toiletteneinheit über einen Frischwassertank und einen Abwassertank. Auch hier wird, wie in der Toiletteneinheit, ein Behälter für Elektronik und weitere zum Betrieb notwendigen Komponenten vorgesehen. Das Gehäuse der mobilen Handwascheinheit kann vorteilhafterweise auch Abfallbehälter oder Behälter zur Aufnahme von Reinigungstüchern und dergleichen aufweisen. Die Abdeckung des Gehäuses der mobilen Wascheinheit kann optional auch teilbar sein und neben dem Waschbecken weitere Facilities, wie einen ausklappbaren Wickeltisch zur Verfügung stellen, der einfach von den Passagieren bei Bedarf ausgeklappt werden kann.

Gemäß einer weiteren Ausgestaltung der Erfindung weist das Toilettenmonument eine von der ersten und der zweiten Öffnung verschiedene dritte Öffnung zur Aufnahme einer weiteren mobilen Sanitäreinheit in Form einer Duscheinheit auf.

Auf diese Weise kann der Reisekomfort der Passagiere erhöht werden, da sie die Möglichkeit zum Duschen oder Baden erhalten. Je nach zur Verfügung stehenden Räumlichkeiten können diese Wascheinheiten als Sitzdusche bzw. Wanne ausgelegt sein. Bei dieser Ausführungsform bietet sich jedoch ein Anschluss an die zentrale Wasserversorgung an, da voraussichtlich größere Wassermengen gebraucht werden. Auch ist ein Anschluss an das zentrale Abwassersystem wie Drainmast von Nutzen, da die anfallenden Wassermengen als Grauwasser gleich nach außen abgeleitet werden können. Zur Wartung können die Dusch- bzw. Wanneneinheiten dann wie die oben genannten mobilen Sanitäreinheiten nach draußen durch die Passagiertür transportiert werden.

Gemäß einer weiteren Ausführungsform der Erfindung weist das Toilettenmonument eine von der ersten und der zweiten Öffnung verschiedene dritte Öffnung zur Aufnahme einer weiteren mobilen Sanitäreinheit in Form eines Urinals auf.

Auf diese Weise können vorteilhaft eine Toiletteneinheit in Form einer Sitztoilette mit einer weiteren Toiletteneinheit in Form eines Urinals in einem Toilettenmonument kombiniert werden.

Ferner kann das Toilettenmonument in einem Luftfahrzeug verwendet werden.

Ein Toilettenmonument für Flugzeuge mit mindestens einer Aufnahme für eine mobile Sanitäreinheit ermöglicht es, auf kundenspezifische Wünsche einzugehen und durch die dezentrale Reinigung der mobilen Sanitäreinheiten Zeit und Kosten einzusparen.

Ferner sei darauf hingewiesen, dass die obigen Merkmale auch kombiniert werden können. Die Kombination der obigen Merkmale kann zu wechselwirkenden Effekten und Wirkungen führen, die über die Einzelwirkungen der entsprechenden Merkmale hinausgeht, auch wenn dies nicht ausdrücklich im Detail beschrieben wird.

Beispielhafte Ausführungsformen der Erfindung werden im Folgenden mit Bezugnahme auf die folgenden Zeichnungen beschrieben.

### Kurze Beschreibung der Zeichnungen

Fig. 1: Seitenansicht eines Bordtoilettenmonumentes mit Öffnungen zur Aufnahme von zwei mobilen Sanitäreinheiten.
Fig. 2: Seitenansicht eines Bordtoilettenmonumentes beim Entfernen von zwei mobilen Sanitäreinheiten aus einem Flugzeug.
Fig. 3: Detailansicht eines Toilettenmonumentes mit einer Toiletteneinheit und einer mobilen Wascheinheit.
Fig. 4: Detailansicht einer mobilen Toiletteneinheit mit Spülwassertank.
Fig. 5: Schemazeichnung eines Toilettenmonumentes mit einer mobilen Toiletteneinheit mit Rezirkulationstechnik und Anschlüsse an zentrale Systeme eines Flugzeuges.
Fig. 6: Schemazeichnung einer mobilen Toiletteneinheit mit Spülwassertank zur Integration in einem Toilettenmonument.

### Detaillierte Beschreibung der Zeichnungen

Das erfindungsgemäße Toilettenmonument wird im Folgenden anhand beispielhaften Ausführungsformen für die Verwendung in einem Flugzeug beschrieben. Beispielhaft für mobile Sanitäreinheiten werden in den folgenden Figuren eine Toiletteneinheit und eine Handwascheinheit gezeigt.

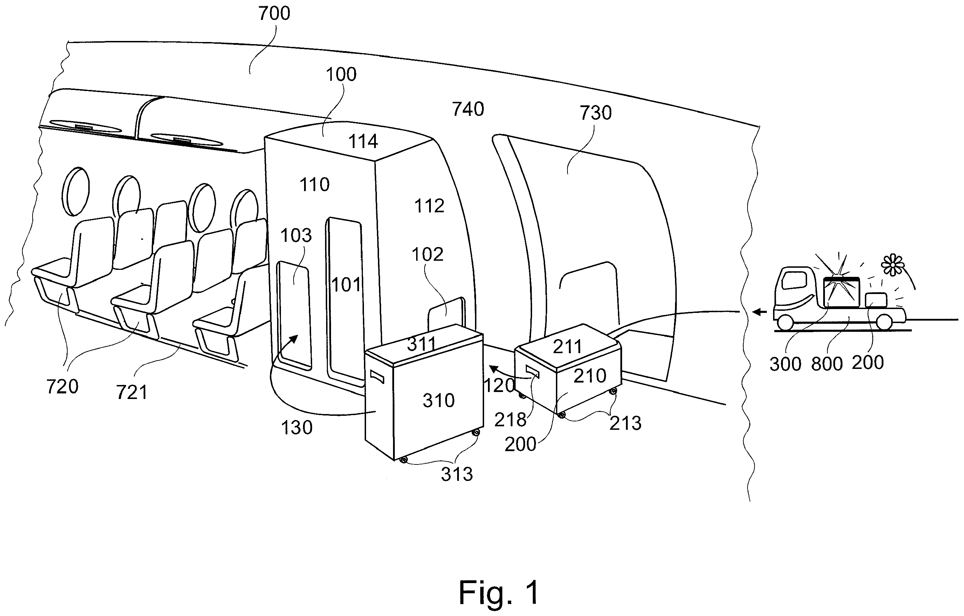

Fig. 1 zeigt in einer dreidimensionalen Seitenansicht eines Toilettenmonument 100 eines Flugzeuges 700. Das Toilettenmonument 100 ist zwischen Sitzreihen 720 und einem Türbereich der Eingangstür bzw. Passagiertür 730 angeordnet. Der Flugzeuginnenraum wird nur in einem Ausschnitt dargestellt, das Toilettenmonument 100 ist an die Flugzeugstruktur angebunden beispielsweise durch Schienen 721, die auch für andere Flugzeuginneneinrichtungsgegenstände wie Passagiersitze 720 verwendet werden. Ferner umfasst das Toilettenmonument feststehende Seitenwände 110, 112 und eine Deckenabschnitt 114, der etwa mit der Höhe der Oberseite der Gebäckaufbewahrungen abschließt. Dabei kann die Rückwand des Toilettenmonumentes durch die Flugzeuginnenwand 740 gebildet sein. Das Toilettenmonument benötigt zur Flugzeugstrukturverbindung einerseits Verbindungen am Boden, wie nicht gezeigte Sitzschienen oder ähnliche Ansatzpunktbefestigungen, andererseits optional Zugstangen, die an der Decke 114 an der Innenwand der Flugzeugkabine 740 befestigt werden können.

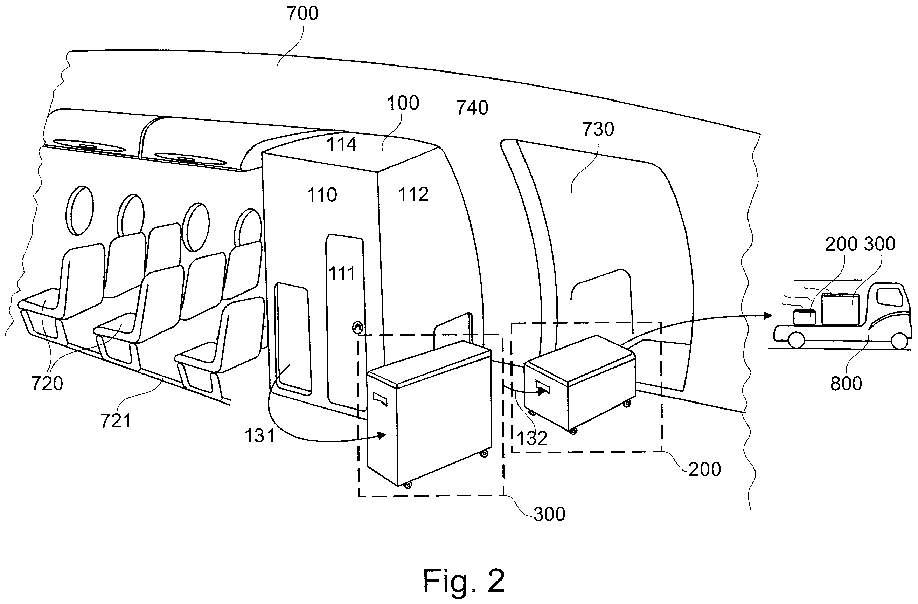

Das Toilettenmonument kann in einem weiteren Ausführungsbeispiel auch als geschlossene Kabine ausgebaut werden umfassend neben den Seitenwänden und dem Deckenabschnitt 114 eine Rückwand und ein Bodenelement (nicht dargestellt). In beiden Ausführungsbeispielen weist das Toilettenmonument eine Toilettentür 111 (vgl. Figur 2) auf, die in der Öffnung 101 entweder als Vollelement oder als Falttür aufgenommen werden kann. Zusätzlich weist die Gangwand 110 eine weitere Öffnung 103 auf, die in dem dargestellten Beispiel eine Handwascheinheit 300 aufnehmen kann. Nach Einschub in die Aufnahme kann ein passendes Wandelement in die Öffnung 103 eingesetzt werden, dass fest arretiert werden kann. Die Elemente zum Verschließen könnten sich beispielsweise in der Seitenwand befinden und bei Bedarf heruntergefahren werden. Eine weitere platz- und gewichtsparende Möglichkeit zum Verschließen des Toilettenelementes ist, die Seitenwände der mobilen Sanitäreinheiten selbst als Verschlusselemente der Öffnungen 102 und 103 Toilettenelementes zu verwenden.

Die Seitenwand 112 weist eine Öffnung 102 auf, die geeignet ist, eine Toiletteneinheit 200 als mobile Sanitäreinheit aufzunehmen. In dem dargestellten Beispiel ist das Toilettenmonument 100 nicht eben mit dem Kabinenboden, sondern umfasst einen weiteren Innenboden, eine sogenannte Bodenwanne, die tragende Flächen aufweist und ausgeformt ist, Personen zu tragen. Auf diese Weise kann eine einfache Reinigung des Toilettenmonumentes 100 realisiert werden. Hieraus ergibt sich eine Schwellenhöhe in bei den Öffnungen 102 und 103 des Toilettenmonuments. Um die mobilen Sanitäreinheiten einfach in die Ebene des Toilettenmonumentes bewegen zu können, bieten sich Keile oder herausfahrbare Schienenvorrichtungen an. Alternativ können die mobilen Sanitäreinheiten auch nur per Hand in die korrekte Höhe angehoben werden und anschließend in die Öffnung bzw. Aufnahme eingeschoben werden. Als weitere Variante (nicht dargestellt) kann die Bodenwanne des Toilettenmonumentes so ausgestaltet sein, dass sich keine Schwellen bei den Öffnungen 102 und 103 befinden und die Module einfach einfahrbar sind. Die Bodenwanne kann bei dieser Ausführungsform eine Bodenfläche mit Aussparungen für die mobilen Sanitärmodule aufweisen.

Das Einschieben ist in Fig. 1 durch den Pfeil 130 für die mobile Handwascheinheit 300 und durch den Pfeil 120 für die mobile Toiletteneinheit 200 dargestellt. Vorteilhafterweise können die an den mobilen Sanitäreinheiten befestigten Rollen oder Kufen so angebracht sein, dass die unteren Flächen des Gehäuses ideal auf der unteren Kante der Öffnung 102 bzw. 103 aufliegen können. Die Rollen 213 könnten in diesem Fall bei Einschub eingeklappt werden und eine Befestigung im Toilettenmonument könnte mit einem an dem Gehäuse angebrachten Schienensystem vollzogen werden. Dieses Schienensystem kann sowohl an der Unterseite des Gehäuses als auch an der Rückseite des Gehäuses angeordnet sein.

Ferner ist in Fig. 1 ein Transportfahrzeug 800 dargestellt, das bereits gewartete bzw. frisch aufgefüllte und gereinigte mobile Sanitäreinheiten 200 bzw. 300 an den Eingangsbereich des Flugzeuges 700 liefert.

Fig. 2 zeigt eine weitere dreidimensionale Seitenansicht des Toilettenmonumentes 100, welches in einem Flugzeug 700 angeordnet ist. In dieser Darstellung wird das Entfernen der mobilen Sanitäreinheiten gezeigt. Die Pfeile 131 und 132 zeigen die Herausnahme und Abtransport der mobilen Wascheinheit 300 bzw. der mobilen Toiletteneinheit 200. Diese beiden Einheiten können dann mit einem geeigneten Transportfahrzeug 800 zur Reinigung bzw. Desinfektion oder Wartung oder Reparatur abtransportiert werden.

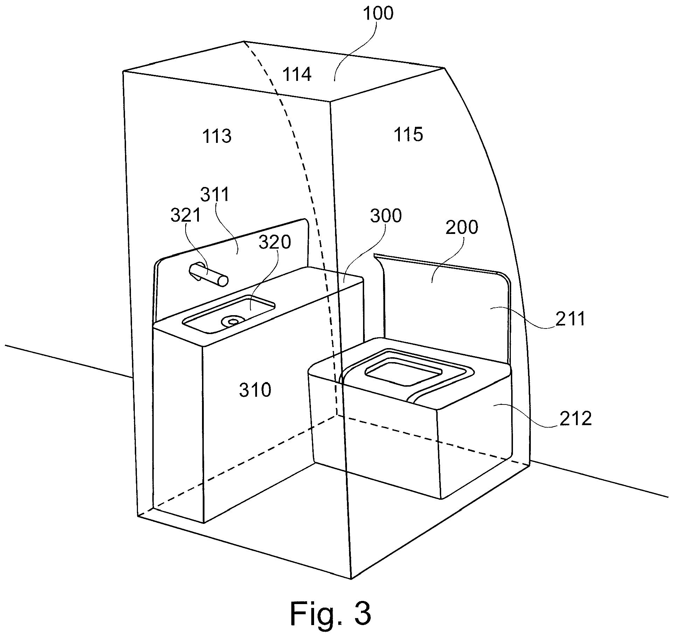

Fig. 3 zeigt eine Detailansicht des Toilettenmonumentes 100, wobei die Rückwand 115, der Deckenabschnitt 114 und die Seitenwand 113, die zu den Passagiersitzreihen zeigt, dargestellt sind. Die Seitenfläche 212 des Gehäuses der mobilen Toiletteneinheit, kann so ausgeführt sein, dass sie bündig mit der Ebene der festen Seitenwand 112 des Toilettenmonumentes abschließt.

Weiterhin ist die mobile Handwascheinheit 300 dargestellt mit einem Waschbecken 320 und einem Gehäuse 310 sowie einer Abdeckung 311, die eine Wasserzuleitungsvorrichtung 321 aufweist. In einer weiteren Ausführungsform der Wascheinheitsabdeckung 311 kann die Abdeckung geteilt sein, wobei die aufklappbare Abdeckung neben der Waschbeckeneinheit als herausziehbarer oder aufklappbarer Tisch fungieren kann.

Nicht dargestellt in der Fig. 3 sind Anbindungsvorrichtungen zur gesicherten und funktionsankoppelnden Aufnahme der mobilen Sanitäreinheiten 200 und 300. Als Anbindungsvorrichtungen eignen sich beispielsweise federvorgespannte Arretierstifte, welche in die im Toilettenmonument angeordneten Aufnahmen springen können. Die Arretierstifte können dann zur Entriegelung durch Kontrollklinken gelöst werden. Ferner kann das Arretiersystem dem zentralen Flugzeugkommunikationssystem anzeigen, ob die mobilen Sanitäreinheiten 200 bzw. 300 arretiert und funktional angekoppelt worden sind.

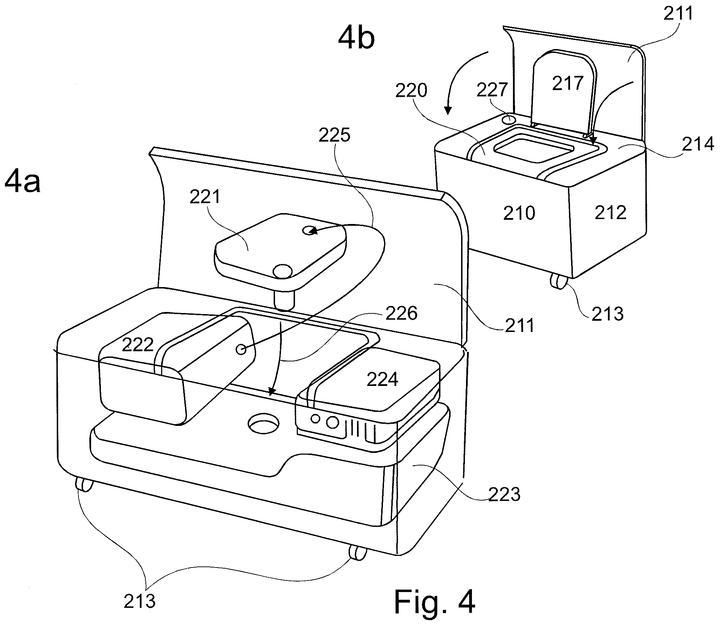

Fig. 4 zeigt zwei dreidimensionale Ansichten 4a und 4b einer Toiletteneinheit, wobei eine Innenansicht des Gehäuses dargestellt ist. Fig. 4a zeigt eine Spüllösung der Toiletteneinheit, dies bedeutet, dass ein Frischwasser- bzw. Spüllösungstank 222 vorgesehen ist, der durch einen geeigneten Anschluss 225 die Toilettenschüssel 221 mit Spülwasser versorgen kann. Anfallendes Abwasser kann zusammen mit Fäkalien in dem Auffangbehälter 223 gesammelt werden. Weiterhin ist ein Behälter zur Aufnahme von Betriebsaggregaten 224 dargestellt. Dieser Behälter kann sowohl die Elektronik als auch den Controller und weitere notwendige elektronischen Komponenten der mobilen Sanitäreinheit umfassen. Weitere Komponenten, die zum Betrieb der mobilen Toiletteneinheit notwendig sind, wie Pumpen, Zuleitungs- und Ableitungsrohre, Ventile sind in Fig. 4a nicht dargestellt.

Fig. 4b stellt die mobile Toiletteneinheit dar mit einer Toilettensitzabdeckung 217 und einem Toilettensitz 220. Ein Toilettenschalter bzw. Spülknopf 227 ist beispielhaft dargestellt. Es sind jedoch auch andere Ausführungsformen möglich, wie zum Beispiel Spülhebel oder Kippschalter bzw. Fußpedale, die für den Betrieb aus der mobilen Sanitäreinheit herausgeklappt werden können. Eine geruchs- und wasserdichte Verschlussmöglichkeit kann einerseits die Toilettenabdeckung 211 bieten und andererseits der Toilettendeckel 217 selbst.

Nicht dargestellt in den Abbildungen 4a bzw. 4b sind Möglichkeiten zur Aufnahme in dem Gehäuse der mobilen Sanitäreinheit von beispielsweise Toilettenpapier oder anderen Hygieneartikeln. Ferner kann auch eine Aufnahme in der oberen Gehäuseabdeckung 214 oder in der vorderen Seitenwand 210 für einen Abfallbehälter vorgesehen sein.

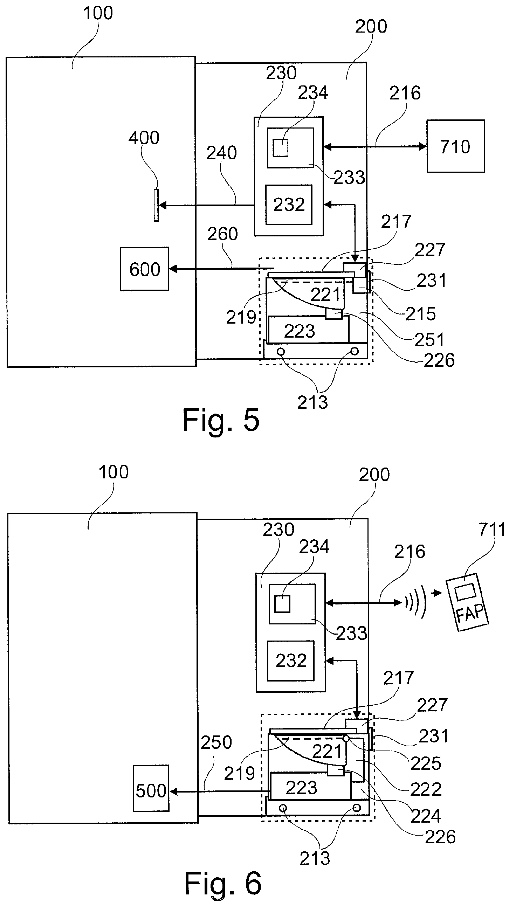

Fig. 5 zeigt eine schematische Darstellung eines weiteren Ausführungsbeispiels des Toilettenmonumentes 100. In das Toilettenmonument 100 kann die Toiletteneinheit 200 modular eingeschoben werden. Die mobile Sanitäreinheit ist hier in Form einer wasserlosen Toiletteneinheit gezeigt, die mit einem gestrichelten Quadrat gekennzeichnet ist. In dem gezeigten Fall handelt es sich um eine Toilette des Typs Rezirkulation. Sie umfasst lediglich einen Auffangbehälter 223 und das anfallende Abwasser kann über die Rezirkulationseinheit 251, die Filter, Pumpen und geeignete Ventile umfasst, in das Spülrohr 219 geleitet werden. Die Spülung kann durch den Schalter 227 aktiviert werden und zur Spülung der Toilettenschüssel 221 verwendet werden. Das Verbindungsrohr 226 verbindet die Toilettenschüssel mit dem Auffangbehälter und umfasst (nicht dargestellt) einen effektiven Geruchsabschluss in Form eines Ventils oder dergleichen.

Schematisch ist auch eine Sensorikeinheit 215 dargestellt, die Sensoren umfasst wie Füllstandsmesser, die zum Beispiel in dem Auffangbecken für das Abwasser bzw. Fäkalien als Schwimmer positioniert sind und Messdaten an die Elektronikeinheit melden können. Ferner können die Füllstände über das nach außen sichtbare Anzeigepanel 231 gezeigt werden. Dies erleichtert die Wartung für das Personal, da durch eine Statusanzeige nach außen, die vorzugsweise unabhängig von der Stromversorgung ist, keine Verwechslung zwischen bereits gereinigten oder zu reinigenden Einheiten erfolgen kann.

Zur Steuerung der Funktionen der Toiletteneinheit ist schematisch eine Steuerungseinheit 230 gezeigt, die einen Prozessor 233 mit einer Speichereinheit 234 aufweist und eine interne Stromversorgung 232 zum Beispiel in Form eines Kondensators. Für eventuelle Ausfälle der internen Stromversorgung oder auch zur Ladung derselben kann ein Anschluss 240 zu einer externen Stromversorgung 400, die in dem Flugzeug für alle elektronischen Einheiten verwendet wird, vorgesehen werden. Ferner ist es vorteilhaft, eine Verbindung zur Kommunikation mit der zentralen Flugzeugelektronik zu realisieren. Die Schnittstelle 216 kann beispielsweise eine drahtlose Verbindung zum Kabinenkommunikationssystem 710 sein. Auf diese Weise kann dem Flugzeugpersonal einfach über das Forward Attendant Panel (FAP) 711 beispielsweise die Füllstände der mobilen Sanitäreinheit angezeigt werden oder auch die Arretierung der mobilen Sanitäreinheit 200 in dem Toilettenmonument 100 gemeldet werden. Der Speicher kann dazu dienen, die Betriebszyklen und Wartungszyklen über einen größeren Zeitraum nachzuvollziehen.

Da bei dem gezeigten Rezirkulationssystem eventuell Geruchsbildungen auftreten können, bietet es sich an, die in der Toiletteneinheit anfallenden Luftvolumina durch eine Verbindung 260 zu dem zentralen Luft-Extraktions-System des Flugzeuges 600 anzuordnen. Falls die wasserlose Toiletteneinheit 200 ohne ein zentrales Luftabzugssystem 600 angeordnet werden soll, ist ein geruchsabschließender Toilettendeckel 217 von Vorteil, den man mit entsprechenden Schnellverschlüssen luftabdichtend verschließen kann.

Fig. 6 zeigt ein Toilettenmonument 100 mit einer mobilen Sanitäreinheit 200 in Form eines Spültoiletteneinheit, die mit einem Spülwassertank 222 versehen ist. Wie in dem vorigen Ausführungsbeispiel umfasst diese Toiletteneinheit einen Abwassertank 223, einen Toilettensitz 221 mit einem Spülrohr 219. Die Toilettenschüssel kann mit einer Abdeckung 217 versehen werden. Für den Benutzer einfach zugänglich ist der Toilettenschalter 227.

Ferner ist zur Aufnahme von weiteren Komponenten wie Pumpen, Ventile oder dergleichen der Aufnahmebehälter 224 vorgesehen, der auch die Elektronikeinheit umfasst. Die Elektronikeinheit 200 ist schematisch dargestellt und weist wie in Figur 5 einen Prozessor 230 mit einem Speicher 234 auf sowie einen interne Stromversorgung 232. Die Datenkommunikation kann über Wireless LAN über die Schnittstelle 216 erfolgen. Auf diese Weise kann das Fachpersonal über den Forward Attendant Panel (FAP) 711 einfach über die Betriebszustände der mobilen Sanitäreinheit informiert werden.

Nach Entfernen der mobilen Toiletteneinheit aus dem Toilettenmonument 100 kann über die Anzeige 231, die nach außen sichtbar ist, das Fachpersonal den Betriebsstatus der Toiletteneinheit überprüfen. Über die Rollen 213 ist die mobile Sanitäreinheit einfach während der Standard Turnarounds entfernbar. Der Austausch dieser Einheit ist somit sehr unkompliziert und die fahrbare Box kann zum Reinigen weitertransportiert werden.

Für diese Spülwassertank-Lösung ist ein Unterdrucksystem vorgesehen. Der Wasservorratstank 222 liefert das erforderliche Wasser zum Spülen. Bei fehlendem Wasser wird die Toiletteneinheit außer Funktion gesetzt. Eine entsprechende Information wird an das zentrale Kommunikationssystem des Flugzeuges weitergeleitet und eine Verriegelung der Toilettentür veranlasst (z.B. durch Meldung an Cabin Crew). Geeignete Ventile verhindern die Entleerung des Wasservorratstankes bzw. jeglichen Rückfluss von dem Abwasserbehälter in die Toilettenschüssel. Mit Hilfe einer nicht dargestellten Spülpumpe kann das Wasser unter Druck über das Spülrohr 219 in die Toilettenschüssel eingespritzt werden.

Vorteilhafterweise ist das Spülrohr rund um die Toilettenschüssel angeordnet, um eine effektive Reinigung der Toilettenschüssel 221 zu gewährleisten. Ferner können die Spülzeiten der Toiletteneinheit über den Schalter 227 variiert werden. Somit können auch Kundenwünsche hinsichtlich der Spüldauer und ein sparsamer Wasserverbrauch realisiert werden.

Ein Vakuummotor, der in dem Aufnahmebehälter 224 angeordnet ist, sorgt für einen Unterdruckaufbau im Abwassersammeltank 223. Der Vakuummotor kann beispielsweise nur in Betrieb gesetzt werden, wenn die Türe 111 der ersten Öffnung 101 verriegelt wird. Nach Betätigung der Spültaste 227 kann das in dem Verbindungsrohr 226 entsprechende Ventil geöffnet werden und die Abwässer aus der Toilettenschüssel gesaugt werden und in dem Fäkaliensammelbehälter 223 befördert werden. In dieser Figur nicht dargestellt kann auch eine Verbindung zum zentralen Extraktionssystem 600 angeordnet sein, um die Lüftung der Toilettenkabinenluft zu gewährleisten. Ferner werden für den Flugzeugbetrieb vorgeschriebene Rauchmelder (nicht dargestellt) in der Toiletteneinheit installiert. Bei möglichen Rauchmeldungen kann dies zentral an das Kabinenkommunikationssystem weitergegeben werden.

Für die Spülwasserlösung der Toiletteneinheit kann eine Verbindungsleitung 250 zum zentralen Abwassersystem 500 installiert werden. Um das Abwasser zum zentralen Drainmast leiten zu können, müsste allerdings eine Vorbehandlung über Filter oder ähnliches erfolgen. Da zentrale Wasseraufbereitungsanlagen in Personentransportfahrzeugen nicht üblich sind, ist eine dezentrale Desinfektion und Entsorgung der Abwässer bzw. Schwarzwassermengen von Vorteil. Der Controller 230 kann die Füllstände der mobilen Sanitäreinheit überwachen und falls der maximale Füllstand erreicht ist, kann eine zentrale Abwasserentsorgung über das zentrale Abwassersystem 500 notwendig sein.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt. Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Toilettenmonument (100) umfassend:
- eine Aufnahme (120);
- eine mobile Sanitäreinheit (200);
- eine erste Öffnung (101); und
- eine zweite Öffnung (102);
wobei die Aufnahme (120) ausgelegt ist, die mobile Sanitäreinheit (200) aufzunehmen;
wobei die mobile Sanitäreinheit (200) aus dem Toilettenmonument herausnehmbar ist und alle für den Betrieb der Sanitäreinheit erforderlichen Komponenten aufweist;
wobei die erste Öffnung (101) zum Betreten des Toilettenmonumentes ausgelegt ist; und
wobei die zweite Öffnung (102) von der ersten Öffnung (101) verschieden ist und zum Einbringen und Entfernen der mobilen Sanitäreinheit (200) in und aus dem Toilettenmonument ausgelegt ist.

2. Toilettenmonument gemäß Anspruch 1, wobei die mobile Sanitäreinheit (200) ein Gehäuse (210) mit einer geruchs- und/oder flüssigkeitsverschließenden Abdeckung (211) aufweist.

3. Toilettenmonument gemäß Anspruch 1 oder 2, wobei die mobile Sanitäreinheit (200) eine Roll- oder Gleitvorrichtung (213) aufweist.

4. Toilettenmonument gemäß einem der Ansprüche 1 bis 3, wobei die mobile Sanitäreinheit (200) eine Seitenwand (212) umfasst, die die zweite Öffnung (102) des Toilettenmonumentes (100) verschließt, wenn die Sanitäreinheit (200) in der Aufnahme ist.

5. Toilettenmonument gemäß einem der Ansprüche 1 bis 4 mit einer Anbindungsvorrichtung (121) zur gesicherten und funktionsankoppelnden Anbindung der mobilen Sanitäreinheit (200) in der Aufnahme (120).

6. Toilettenmonument gemäß einem der Ansprüche 1 bis 5, wobei die mobile Sanitäreinheit (200) eine Schnittstelle (240) zur externen Stromversorgung (400) aufweist, wobei der Strom induktiv übertragen wird.

7. Toilettenmonument gemäß einem der Ansprüche 1 bis 6, wobei die Sanitäreinheit eine Sensorik (215) aufweist zur Ausgabe von Messdaten; und
wobei die Messdaten über eine drahtlose Schnittstelle (216) übertragen werden.

8. Toilettenmonument gemäß einem der Ansprüche 1 bis 7, wobei die mobile Sanitäreinheit (200) einen Anschluss (250) zur Verbindung mit einem zentralen Abwassersystem (500) aufweist.

9. Toilettenmonument gemäß einem der Ansprüche 1 bis 8, wobei die Abdeckung (211) der Sanitäreinheit eine Rollabdeckung ist.

10. Toilettenmonument gemäß einem der Ansprüche 1 bis 9, wobei die mobile Sanitäreinheit eine Toiletteneinheit umfasst, wobei die Toiletteneinheit aufweist:
- eine Toilettenschüssel (221);
- einen Auffangbehälter (223) für Fäkalien und Abwasser; und
- einen Behälter zur Aufnahme von Betriebsaggregaten (224).

11. Toilettenmonument gemäß Anspruch 10, wobei die mobile Toiletteneinheit einen Anschluss (260) zur Verbindung mit einem zentralen Air-Extraktionssystem (600) aufweist.

12. Toilettenmonument gemäß einem der Ansprüche 1 bis 11, wobei das Toilettenmonument eine von der ersten und der zweiten Öffnung (102) verschiedene dritte Öffnung (103) zur Aufnahme einer weiteren mobilen Sanitäreinheit (300) in Form einer Handwascheinheit (310) aufweist.

13. Toilettenmonument gemäß einem der Ansprüche 1 bis 11, wobei das Toilettenmonument eine von der ersten und der zweiten Öffnung (102) verschiedene dritte Öffnung (103) zur Aufnahme einer weiteren mobilen Sanitäreinheit (300) in Form einer Duscheinheit aufweist.

14. Toilettenmonument gemäß einem der Ansprüche 1 bis 11, wobei das Toilettenmonument eine von der ersten und der zweiten Öffnung (102) verschiedene dritte Öffnung (103) zur Aufnahme einer weiteren mobilen Sanitäreinheit (300) (300) in Form eines Urinals mit einem Spülwassertank (222) aufweist.

15. Verwendung eines Toilettenmonumentes (100) nach einem der Ansprüche 1 bis 14 in einem Luftfahrzeug (700).

## Claims

1. Toilet monument (100) comprising:
- a receptacle (120);
- a mobile sanitary unit (200);
- a first opening (101); and
- a second opening (102);
wherein the receptacle (120) is configured to accommodate the mobile sanitary unit (200);
wherein the mobile sanitary unit (200) is removable from the toilet monument and comprises all components necessary for operating the sanitary unit;
wherein the first opening (101) is designed for entering the toilet monument; and wherein the second opening (102) differs from the first opening (101) and is designed for introducing the mobile sanitary unit (200) into the toilet monument and removing it therefrom.

2. Toilet monument according to claim 1, wherein the mobile sanitary unit (200) comprises a housing (210) with a closable lid (211) which is odour- and/or leak-proof.

3. Toilet monument according to claim 1 or claim 2, wherein the mobile sanitary unit (200) comprises a rolling or sliding device (213).

4. Toilet monument according to any one of claims 1 to 3, wherein the mobile sanitary unit (200) comprises a side wall (212) which closes the second opening (102) of the toilet monument (100) when the sanitary unit (200) is in the receptacle.

5. Toilet monument according to any one of claims 1 to 4 with a connecting device (121) for fixing the mobile sanitary unit (200) securely and in a functional coupling manner in the receptacle (120).

6. Toilet monument according to any one of claims 1 to 5, wherein the mobile sanitary unit (200) comprises an interface (240) to the external power supply (400), wherein the current is transmitted inductively.

7. Toilet monument according to any one of claims 1 to 6, wherein the sanitary unit comprises a sensor technology (215) for outputting measured data; and
wherein the measured data is transmitted via a wireless interface (216).

8. Toilet monument according to any one of claims 1 to 7, wherein the mobile sanitary unit (200) comprises a connection (250) for linking to a central sewage system (500).

9. Toilet monument according to any one of claims 1 to 8, wherein the lid (211) of the sanitary unit is a roller lid.

10. Toilet monument according to any one of claims 1 to 9, wherein the mobile sanitary unit comprises a toilet unit, wherein the toilet unit comprises:
- a toilet bowl (221);
- a collecting container (223) for faecal matter and liquid waste; and
- a receptacle for accommodating duty units (224).

11. Toilet monument according to claim 10, wherein the mobile toilet unit has a connection (260) for linking to a central air extraction system (600).

12. Toilet monument according to any one of claims 1 to 11, wherein the toilet monument has a third opening (103) different from the first and second opening (102), said third opening (103) being configured to accommodate an additional mobile sanitary unit (300) in form of a hand-washing unit (310).

13. Toilet monument according to any one of claims 1 to 11, wherein the toilet monument has a third opening (103) different from the first and second opening (102), said third opening (103) being configured to accommodate an additional mobile sanitary unit (300) in form of a shower unit.

14. Toilet monument according to any one of claims 1 to 11, wherein the toilet monument has a third opening (103) different from the first and second opening (102), said third opening (103) being designed to accommodate an additional mobile sanitary unit (300) in form of a urinal with a flush water tank (222).

15. Use of a toilet monument (100) according to any one of claims 1 to 14 in an aircraft (700).

## Revendications

1. Installation de toilettes (100) comprenant :
- un logement (120) ;
- un ensemble sanitaire mobile (200) ;
- une première ouverture (101) ; et
- une deuxième ouverture (102) ;
dans laquelle le logement (120) est conçu pour recevoir l'ensemble sanitaire mobile (200) ;
dans laquelle l'ensemble sanitaire mobile (200) peut être enlevé de l'installation de toilettes et présente tous les éléments nécessaires au fonctionnement de l'ensemble sanitaire ;
dans laquelle la première ouverture (101) est conçue pour entrer dans l'installation de toilettes ; et
dans laquelle la deuxième ouverture (102) est différente de la première ouverture (101) et est conçue pour insérer l'ensemble sanitaire mobile (200) dans l'installation de toilettes et l'enlever de celle-ci.

2. Installation de toilettes selon la revendication 1, dans laquelle l'ensemble sanitaire mobile (200) présente un carter (210) avec un couvercle (211) qui enferme les liquides et/ou les odeurs.

3. Installation de toilettes selon la revendication 1 ou 2, dans laquelle l'ensemble sanitaire mobile (200) présente un moyen roulant ou coulissant (213).

4. Installation de toilettes selon une des revendications 1 à 3, dans laquelle l'ensemble sanitaire mobile (200) comprend une paroi latérale (212) qui ferme la deuxième ouverture (102) de l'installation de toilettes (100) lorsque l'ensemble sanitaire (200) est dans le logement.

5. Installation de toilettes selon une des revendications 1 à 4 comportant un moyen d'attache (121) pour attacher l'ensemble sanitaire mobile (200) dans le logement (120) de manière sécurisée et accrochée en fonctionnement.

6. Installation de toilettes selon une des revendications 1 à 5, dans laquelle l'ensemble sanitaire mobile (200) présente une interface (240) pour l'alimentation en courant externe (400), le courant étant transmis par induction.

7. Installation de toilettes selon une des revendications 1 à 6, dans laquelle l'ensemble sanitaire présente un ensemble de capteurs (215) pour émettre des données de mesure ; et
dans laquelle les données de mesure sont transmises par le biais d'une interface sans fil (216).

8. Installation de toilettes selon une des revendications 1 à 7, dans laquelle l'ensemble sanitaire mobile (200) présente un raccord (250) pour la liaison à un système d'eaux usées central (500).

9. Installation de toilettes selon une des revendications 1 à 8, dans laquelle le couvercle (211) de l'ensemble sanitaire est un couvercle roulant.

10. Installation de toilettes selon une des revendications 1 à 9, dans laquelle l'ensemble sanitaire mobile comprend une unité de toilettes, l'unité de toilettes présentant :
- une cuvette de toilette (221) ;
- un réservoir collecteur (223) pour les matières fécales et les eaux usées ; et
- un réservoir pour recevoir des groupes servant au fonctionnement (224).

11. Installation de toilettes selon la revendication 10, dans laquelle l'unité de toilettes mobile présente un raccord (260) pour la liaison à un système d'extraction d'air central (600).

12. Installation de toilettes selon une des revendications 1 à 11, dans laquelle l'installation de toilettes présente une troisième ouverture (103) différente de la première et de la deuxième ouverture (102) pour recevoir un autre ensemble sanitaire mobile (300) sous la forme d'une unité de lavabo (310).

13. Installation de toilettes selon une des revendications 1 à 11, dans laquelle l'installation de toilettes présente une troisième ouverture (103) différente de la première et de la deuxième ouverture (102) pour recevoir un autre ensemble sanitaire mobile (300) sous la forme d'une unité de douche.

14. Installation de toilettes selon une des revendications 1 à 11, dans laquelle l'installation de toilettes présente une troisième ouverture (103) différente de la première et de la deuxième ouverture (102) pour recevoir un autre ensemble sanitaire mobile (300) sous la forme d'un urinoir avec un réservoir d'eau de rinçage (222).

15. Utilisation d'une installation de toilettes (100) selon une des revendications 1 à 14 dans un aéronef (700).
